# EUROPEAN PATENT SPECIFICATION

(11) **EP 2 883 269 B1**
(45) Date of publication and mention of the grant of the patent: **08.05.2019**
(21) Application number: 13779649.6
(22) Date of filing: 07.08.2013
(51) Int. Cl.: H01M 12/08, H01M 8/04858, H01M 8/04791, H01M 8/04186, H01M 8/0293, H01M 4/86, H01M 4/13, H01M 10/052

(54) **CONTROLLING THE LOCATION OF PRODUCT DISTRIBUTION AND REMOVAL IN A METAL/OXYGEN CELL**
STEUERUNG DER POSITION EINER PRODUKTVERTEILUNG UND -ENTFERNUNG IN EINER METALL-/SAUERSTOFFZELLE
COMMANDE DE LA POSITION DE DISTRIBUTION ET DE RETRAIT DE PRODUIT DANS UNE CELLULE À MÉTAL/OXYGÈNE

(30) Priority: 10.08.2012 US 201261682030 P
(43) Date of publication of application: 17.06.2015
(73) Proprietor: Robert Bosch GmbH, 70442 Stuttgart (DE); Albertus, Paul, Mountain View, CA 94043 (US); Christensen, John F., Mountain View, CA 94043 (US)
(72) Inventor: ALBERTUS, Paul, Washington, DC 20012 (US); CHRISTENSEN, John, F., Mountain View, CA 94043 (US)
(74) Representative: Isarpatent
(86) International application number: PCT/US2013/054010
(87) International publication number: WO 2014/025926

(56) References cited:
- WO-A1-00/63929
- WO-A1-2011/133982
- WO-A2-2007/075867
- US-A1- 2008 318 135
- US-A1- 2012 094 193
- READ J: "CHARACTERIZATION OF THE LITHIUM/OXYGEN ORGANIC ELECTROLYTE BATTERY", JOURNAL OF THE ELECTROCHEMICAL SOCIETY, ELECTROCHEMICAL SOCIETY, MANCHESTER, NEW HAMPSHIRE; US, vol. 149, no. 9, 29 July 2002 (2002-07-29) , pages A1190-A1195, XP002495473, ISSN: 0013-4651, DOI: 10.1149/1.1498256
- TAKESHI OGASAWARA ET AL: "Rechargeable Li2O2 Electrode for Lithium Batteries", JOURNAL OF THE AMERICAN CHEMICAL SOCIETY, ACS PUBLICATIONS, US, vol. 128, no. 4, 1 February 2006 (2006-02-01), pages 1390-1393, XP002624171, ISSN: 0002-7863, DOI: 10.1021/JA056811Q [retrieved on 2006-01-05]

## Description

### FIELD:

This disclosure relates to batteries and more particularly to batteries including an electrochemical reaction between ions of a metal, such as lithium ions (Li⁺), and oxygen.

### BACKGROUND

Rechargeable lithium-ion batteries are attractive energy storage systems for portable electronics and electric and hybrid-electric vehicles because of their high specific energy compared to other electrochemical energy storage devices. As discussed more fully below, a typical Li-ion cell contains a negative electrode, a positive electrode, and a separator region between the negative and positive electrodes. Both electrodes contain active materials that insert or react with lithium reversibly. In some cases the negative electrode may include lithium metal, which can be electrochemically dissolved and deposited reversibly. The separator contains an electrolyte with a lithium cation, and serves as a physical barrier between the electrodes such that none of the electrodes are electronically connected within the cell.

Typically, during charging, there is generation of electrons at the positive electrode and consumption of an equal amount of electrons at the negative electrode, and these electrons are transferred via an external circuit. In the ideal charging of the cell, these electrons are generated at the positive electrode because there is extraction via oxidation of lithium ions from the active material of the positive electrode, and the electrons are consumed at the negative electrode because there is reduction of lithium ions into the active material of the negative electrode. During discharging, the exact opposite reactions occur.

When high-specific-capacity negative electrodes such as a metal are used in a battery, the maximum benefit of the capacity increase over conventional systems is realized when a high-capacity positive electrode active material is also used. For example, conventional lithium-intercalating oxides (e.g., LiCoO₂, LiNi_{0.8}Co_{0.15}Al_{0.05}O₂, Li_{1.1}Ni_{0.3}Co_{0.3}Mn_{0.3}O₂) are typically limited to a theoretical capacity of ∼280 mAh/g (based on the mass of the lithiated oxide) and a practical capacity of 180 to 250 mAh/g, which is quite low compared to the specific capacity of lithium metal, 3863 mAh/g. The highest theoretical capacity achievable for a lithium-ion positive electrode is 1794 mAh/g (based on the mass of the lithiated material), for Li₂O. Other high-capacity materials include BiF₃ (303 mAh/g, lithiated), FeF₃ (712 mAh/g, lithiated), and others. Unfortunately, all of these materials react with lithium at a lower voltage compared to conventional oxide positive electrodes, hence limiting the theoretical specific energy. Nonetheless, the theoretical specific energies are still very high (> 800 Wh/kg, compared to a maximum of ∼500 Wh/kg for a cell with lithium negative and conventional oxide positive electrodes, which may enable an electric vehicle to approach a range of 300 miles or more on a single charge.

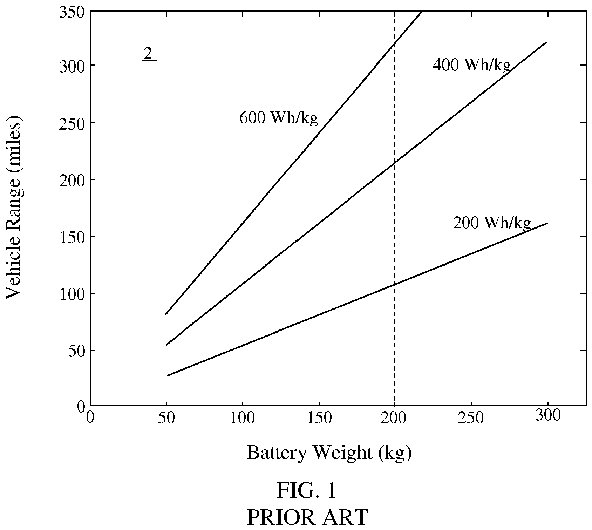

While metal-oxygen batteries can be used in a wide range of applications, using the metal-oxygen batteries to provide power to electric and hybrid vehicles is one area of particular interest. FIG. 1 depicts a chart 2 showing the range achievable for a vehicle using battery packs of different specific energies versus the weight of the battery pack. In the chart 2, the specific energies are for an entire cell, including cell packaging weight, assuming a 50% weight increase for forming a battery pack from a particular set of cells. The U.S. Department of Energy has established a weight limit of 200 kg for a battery pack that is located within a vehicle. Accordingly, only a battery pack with about 600 Wh/kg or more can achieve a range of 300 miles.

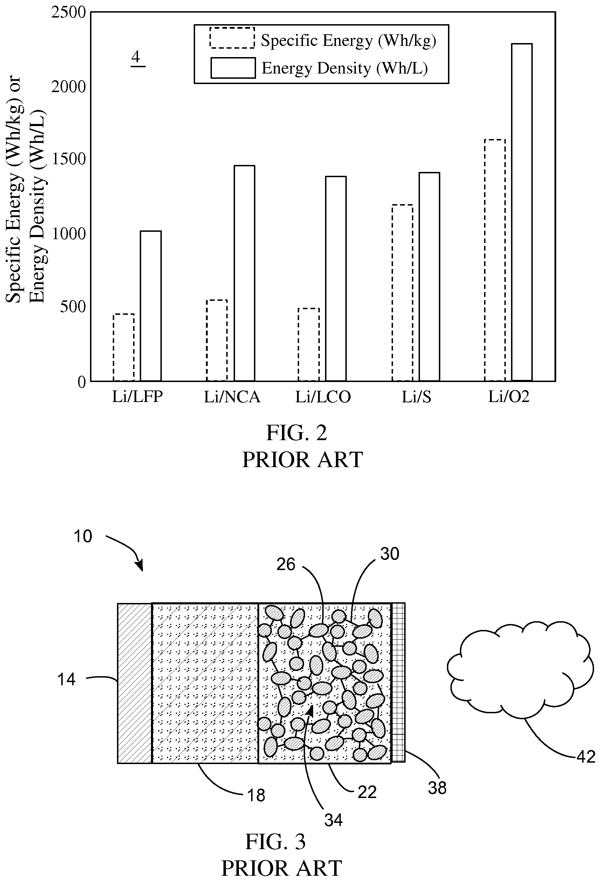

Various lithium-based chemistries have been investigated for use in various applications including in vehicles. FIG. 2 depicts a chart 4 that identifies the specific energy and energy density of various lithium-based chemistries. In the chart 4, only the weight of the active materials, current collectors, binders, separator, and other inert material of the battery cells are included. The packaging weight, such as tabs, the cell can, etc., are not included. As is evident from the chart 4, lithium/oxygen batteries, even allowing for packaging weight, are capable of providing a specific energy >600 Wh/kg and thus have the potential to enable driving ranges of electric vehicles of more than 300 miles without recharging, at a similar cost to typical lithium ion batteries. While lithium/oxygen cells have been demonstrated in controlled laboratory environments, a number of issues remain before full commercial introduction of a lithium/oxygen cell is viable as discussed further below.

A typical lithium/oxygen electrochemical cell 10 is depicted in FIG. 3. The cell 10 includes a negative electrode 14, a positive electrode 22, and a porous separator 18. The negative electrode 14 is typically metallic lithium. The positive electrode 22 includes electrode particles such as particles 26 possibly coated in a catalyst material (such as Au or Pt) and suspended in a porous, electrically conductive matrix 30. An electrolyte solution 34 containing a salt such as LiPF6 dissolved in an organic solvent such as dimethoxyethane or CH3CN permeates both the porous separator 18 and the positive electrode 22. The LiPF6 provides the electrolyte with an adequate ionic conductivity which reduces the internal electrical resistance of the cell 10 to enable a high power capacity.

A portion of the positive electrode 22 is enclosed by a barrier 38. The barrier 38 in FIG. 3 is configured to allow oxygen from an external source 42 to enter the positive electrode 22 while filtering undesired components such as contaminant gases and fluids. The wetting properties of the positive electrode 22 prevent the electrolyte 34 from leaking out of the positive electrode 22. Alternatively, the removal of contaminants from an external source of oxygen, and the retention of cell components such as volatile electrolyte, may be carried out separately from the individual cells. Oxygen from the external source 42 enters the positive electrode 22 through the barrier 38 while the cell 10 discharges and oxygen exits the positive electrode 22 through the barrier 38 as the cell 10 is charged. In operation, as the cell 10 discharges, oxygen and lithium ions are believed to combine to form a discharge product Li₂O₂ or Li₂O in accordance with the following relationship:

*Li* ↔ *Li*⁺ + *e*⁻

(negative electrode) 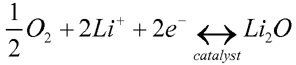 (positive electrode) 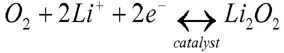 (positive electrode)

The positive electrode 22 in a typical cell 10 is a lightweight, electrically conductive material which has a porosity of greater than 80% to allow the formation and deposition/storage of Li₂O₂ in the positive electrode volume. The ability to deposit the Li₂O₂ directly determines the maximum capacity of the cell. In order to realize a battery system with a specific energy of 600 Wh/kg or greater, a plate with a thickness of 100 µm should have a capacity of 15 mAh/cm2 or more.

Materials that provide the needed porosity include carbon black, graphite, carbon fibers, carbon nanotubes, and other non-carbon materials. There is evidence that each of these carbon structures undergo an oxidation process during charging of the cell, due at least in part to the harsh environment in the cell (possibly pure oxygen, superoxide and peroxide ions and/or species, formation of solid lithium peroxide on the positive electrode surface, and electrochemical oxidation potentials of >3V (vs. Li/Li+)).

A number of investigations into the problems associated with Li-oxygen batteries have been conducted as reported, for example, by Beattie, S., D. Manolescu, and S. Blair, "High-Capacity Lithium-Air Cathodes," Journal of the Electrochemical Society, 2009. 156: p. A44, Kumar, B., et al., "A Solid-State, Rechargeable, Long Cycle Life Lithium-Air Battery," Journal of the Electrochemical Society, 2010. 157: p. A50, Read, J., "Characterization of the lithium/oxygen organic electrolyte battery," Journal of the Electrochemical Society, 2002. 149: p. A1 190, Read, J., et al., "Oxygen transport properties of organic electrolytes and performance of lithium/oxygen battery," Journal of the Electrochemical Society, 2003. 150: p. A1351, Yang, X. and Y. Xia, "The effect of oxygen pressures on the electrochemical profile of lithium/oxygen battery," Journal of Solid State Electrochemistry, p. 1-6, and Ogasawara, T., et al., "Rechargeable Li2O2 Electrode for Lithium Batteries," Journal of the American Chemical Society, 2006. 128(4): p. 1390-1393.

While some issues have been investigated, several challenges remain to be addressed for lithium-oxygen batteries. These challenges include limiting dendrite formation at the lithium metal surface, protecting the lithium metal (and possibly other materials) from moisture and other potentially harmful components of air (if the oxygen is obtained from the air), designing a system that achieves favorable specific energy and specific power levels, reducing the hysteresis between the charge and discharge voltages (which limits the round-trip energy efficiency), and improving the number of cycles over which the system can be cycled reversibly.

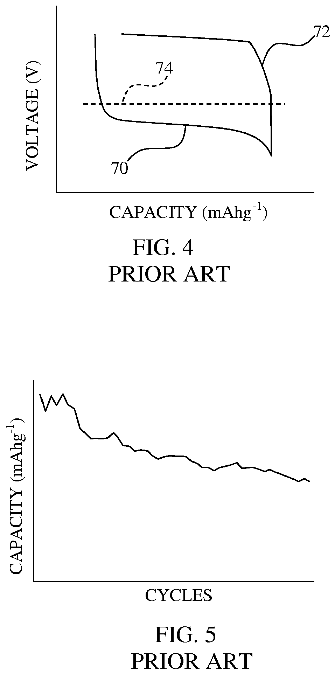

The limit of round trip efficiency occurs due to an apparent voltage hysteresis as depicted in FIG. 4. In FIG. 4, the discharge voltage 70 (approximately 2.5 to 3 V vs. Li/Li+) is much lower than the charge voltage 72 (approximately 4 to 4.5 V vs. Li/Li+). The equilibrium voltage 74 (or open-circuit potential) of the lithium/oxygen system is approximately 3 V. Hence, the voltage hysteresis is not only large, but also very asymmetric.

The large over-potential during charge may be due to a number of causes. With reference to FIG. 3, the reaction between the Li₂O₂ and the conducting matrix 30 may form an insulating film between the two materials. Additionally, there may be poor contact between the solid discharge products Li₂O₂ or Li₂O and the electronically conducting matrix 30 of the positive electrode 22. Poor contact may result from oxidation of the discharge product directly adjacent to the conducting matrix 30 during charge, leaving a gap between the solid discharge product and the matrix 30.

In some cases, poor contact between the discharge product and the conducting matrix 30 leads to a complete disconnection of the solid discharge product. Complete disconnection of the solid discharge product from the conducting matrix 30 may result from fracturing, flaking, or movement of solid discharge product particles due to mechanical stresses that are generated during charge/discharge of the cell. Complete disconnection may contribute to the capacity decay observed for most lithium/oxygen cells. By way of example, FIG. 5 depicts the discharge capacity of a typical Li/oxygen cell over a period of charge/discharge cycles.

Other physical processes which cause voltage drops within an electrochemical cell, and thereby lower energy efficiency and power output, include mass-transfer limitations at high current densities. The transport properties of aqueous electrolytes are typically better than non-aqueous electrolytes, but in each case mass-transport effects can limit the thickness of the various regions within the cell, including the positive electrode. Reactions among O₂ and other metals besides lithium may also be carried out in various media.

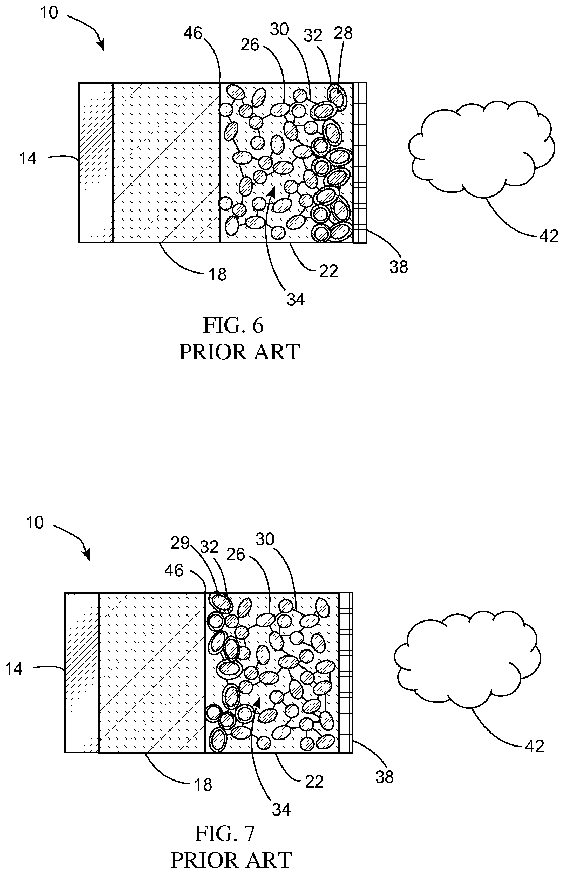

One problem that reduces the available capacity of lithium-air systems occurs when only a fraction of the positive electrode is utilized before Li+ ions and oxygen cease to combine with each other. By way of example, FIG. 6 depicts the cell 10 after discharge occurs. In the cell 10, carbon particles 28 are fully plated with a discharge product 32, with the remaining carbon particles 26 remaining unplated. The discharge product 32 is typically Li₂O₂. The arrangement of the plated carbon particles 28 proximate to the barrier 38 prevents oxygen from the external source 42 from being transported into the regions of the positive electrode 22 surrounding the unplated carbon particles 26. FIG. 7 depicts another example where the discharge product 32 covers carbon particles 29 that are proximate to the negative electrode 14. The arrangement of plated carbon particles 29 prevents lithium from the negative electrode from penetrating the positive electrode 22.

The uneven plating of the cell 10 in FIG. 6 is caused, in part, by an uneven distribution of oxygen in the positive electrode 22. Oxygen is introduced into the positive electrode 22 through the barrier 38, and then diffuses through the electrolyte 34 towards the porous separator 18. The highest concentration of oxygen is near the barrier 38, reducing to a lower concentration at a boundary 46 between the positive electrode 22 and the porous separator 18. Moreover, electrons are supplied to the positive electrode 22 at a location proximate to the barrier 38. Oxygen, electrons, and Li⁺ ions, which are available from the electrolyte 34, react with each other rapidly. The rapid reaction quickly plates carbon particles 28 near barrier 38 with non-conductive discharge product 32. Oxygen diffusion into the positive electrode 22 through barrier 38 is impeded by the plated particles 28, and this can prevent the cell 10 from fully discharging.

In FIG. 7, the presence of Li⁺ ions results in the discharge product 32 quickly plating the particles 29. Once plated, the particles 29 impede additional lithium from the negative electrode 14 from entering the positive electrode 22 to react with oxygen and plate the remaining particles in the conductive matrix 30.

WO 2011/133982 A1 describes a rechargeable metal-air battery comprising a negative electrode capable of taking and releasing active metal ions, a porous positive electrode using oxygen as an electroactive material and an electrolyte configured to conduct ions between the negative electrode and the positive electrode. The electrolyte comprises one or more phases, wherein at least one phase comprises a liquid that at least partially fills the pores of the positive electrode.

Moreover, a number of investigations have been conducted to determine optimal ranges for battery design parameters, include the electrode thickness, as is disclosed in Seungho Yu, Soo Kim, Tae Young Kim, Jin Hyun Nam and Won I1 Cho "Model prediction and Experiments for the Electrode Design Optimization of LiFePO4/Graphite Electrodes in High Capacity Lithium-ion Batteries" (Bull. Korean Chem. Soc. 2013, Vol. 34, No. 1, http://dx.doi.org/10.5012/bkcs.2013.34.1.79).

Another important challenge for Li-oxygen batteries, and metal/air batteries more generally, is that when the discharge product has a fixed composition (i.e., does not make use of the alloy or intercalation reaction mechanisms) and is completely insoluble or nearly insoluble in the electrolyte, a non-uniform current distribution results in a non-uniform product distribution that can lead to pore clogging and thereby low capacity, energy, and power, and possibly introduce safety problems.

What is needed therefore is a battery that permits oxygen and lithium to combine more uniformly throughout the positive electrode. What is further needed is a battery where the distribution of electrical current in the positive electrode is more balanced than prior art devices.

### SUMMARY

The invention provides an electrochemical cell with the features of claim 1 and a method of forming an electrochemical cell with the features of claim 9.

### BRIEF DESCRIPTION OF DRAWINGS

FIG. 1 depicts a prior art plot showing the relationship between battery weight and vehicular range for various specific energies;
FIG. 2 depicts a prior art chart of the specific energy and energy density of various lithium-based cells;
FIG. 3 depicts a prior art flooded lithium-oxygen cell including two electrodes and an electrolyte with a 1 molar concentration of salt in a charged state;
FIG. 4 depicts a prior art discharge and charge curve for a typical Li/oxygen electrochemical cell; and
FIG. 5 depicts a plot showing decay of the discharge capacity for a typical Li/oxygen electrochemical cell over a number of cycles;
FIG. 6 depicts the prior art lithium-oxygen cell of FIG. 3 in a discharged state when the discharge reaction occurs primarily at the positive electrode / current collector boundary;
FIG. 7 depicts the prior art lithium-oxygen cell of FIG. 3 in a discharged state when the discharge reaction occurs primarily at the separator/positive electrode boundary;
FIG. 8 depicts a schematic view of a metal-oxygen cell with two electrodes and a separator, with the positive electrode being flooded and containing an electrolyte having a concentration of a salt of less than one molar, to increase the uniformity of distribution and removal of a discharge product during operation of the cell;
FIG. 9 depicts a relationship between a molar concentration of salt in an electrolyte with the ionic conductivity of the electrolyte;
FIG. 10 depicts the metal-oxygen cell of FIG. 3 after being discharged where the positive electrode is more uniformly plated with discharge product; and
FIG. 11 depicts a process of forming an electrochemical cell including an electrolyte having a salt concentration of less than one molar;
FIG. 12 depicts a schematic view of a metal-oxygen cell with two electrodes and a flooded positive electrode having a conductive matrix with a porosity gradient;
FIG. 13 depicts a schematic view of a metal-oxygen cell with two electrodes and a mixed phase positive electrode having a conductive matrix with a porosity gradient;
FIG. 14 depicts a block diagram of a battery pack including a plurality of cells and a battery management system;
FIG. 15 depicts a schematic view of a metal-oxygen cell with a flooded positive electrode and a pump that adjusts a pressure of oxygen in a positive electrode of the cell; and a diffuser that provides an inert gas to the positive electrode; and
FIG. 16 depicts a schematic view of a metal-oxygen cell with a mixed phase positive electrode and a pump that adjusts a pressure of oxygen in a positive electrode of the cell; and a diffuser that provides an inert gas to the positive electrode.

### DETAILED DESCRIPTION

As used herein, the term "flooded electrode" refers to a positive electrode in a battery that is substantially filled with a liquid electrolyte that typically covers one or more solid materials, such as a conductive matrix and catalysts. A flooded electrode can include a gap near the edge of the electrode, but the liquid electrolyte substantially covers the solid materials, and gasses, such as oxygen, that are present in the electrolyte are diffused in the liquid electrolyte instead of being in a distinct gas phase.

As used herein, the terms "mixed phase electrode" or "mixed phase electrolyte" refer to an electrode where the solid materials in the positive electrode engage both liquid electrolyte and a gas. For example, the positive electrode contains electrolyte that does not completely flood the solid matrix, which leaves some volume for gas in the positive electrode. In one configuration, the positive electrode includes a continuous or nearly continuous gas phase, which means that the gas is formed with a pathway in the gas phase that extends between the separator and the current collector. In some positive electrode configurations, the wettability of the matrix and other solid particles in the positive electrode enables the liquid phase electrolyte to adsorb on the surface of the solid phase material while leaving spaces for the continuous gas phase in the positive electrode.

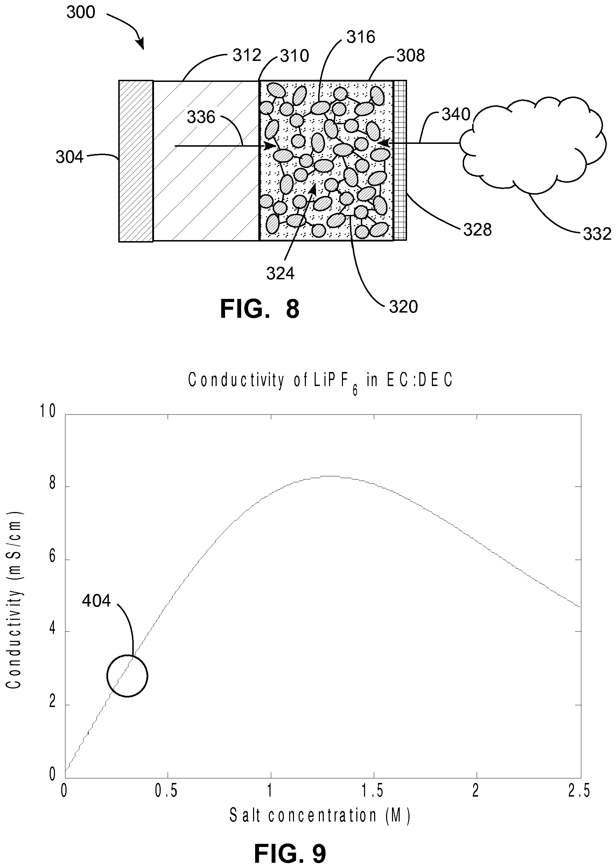

A schematic of an electrochemical cell 300 is shown in Fig. 8. The electrochemical cell 300 includes a negative electrode 304 separated from a thick positive electrode 308 by a selectively permeable separator 312. In FIG. 8, the negative electrode 304 is formed from metallic lithium, although other metals are used in different negative electrode embodiments. The positive electrode 308 includes carbon particles 316 covered in a catalyst material, and/or an oxidation-resistant coating such as SiC. The particles are suspended in a porous matrix 320. The positive electrode 308 has a thickness which is greater than about 60 µm, and is approximately 100 µm in one embodiment. The porous matrix 320 is formed from a conductive material such as conductive carbon or a nickel foam.

The separator 312 enables lithium to pass from the negative electrode 304 to the positive electrode 308 during a discharge cycle, and for lithium to pass from the positive electrode 308 to the negative electrode 304 during a charge cycle. The separator 312 prevents the negative electrode 304 from electrically connecting with the positive electrode 308.

The thickness of the regions in the electrochemical cell 300 depicted in FIG. 8 is also referred to as the "through-plane" direction in the cell 300. While not expressly depicted in the schematic view of FIG. 8, the negative electrode 304, separator 312, positive electrode 308, and barrier 328 can have a width and a length of up to tens of centimeters on a plane that is perpendicular to the through-plane direction.

The electrochemical cell 300 includes an electrolyte solution 324 present in the positive electrode 308. In the electrochemical cell 300, the positive electrode 308 is a flooded electrode with the electrolyte 324 substantially covering the carbon particles 316 and matrix 320. In the exemplary embodiment of FIG. 8, the electrolyte solution 324 includes a metallic salt, LiPF₆ (lithium hexafluorophosphate), dissolved in an organic solvent mixture of ethylene carbonate and diethyl carbonate.

A barrier 328 separates the positive electrode 308 from an external oxygen source 332. The external oxygen source 332 may be pure oxygen or may include oxygen mixed with other gases, with the atmosphere of the earth being one possible oxygen source. In FIG. 8, the barrier 328 is an aluminum mesh which permits oxygen to enter and exit the positive electrode 308 while preventing the electrolyte 324 from exiting the positive electrode 308. The barrier 328 also acts as a current collector that enables electrical current to flow into and out of the positive electrode 308. The barrier 328 also keeps contaminants such as water from entering the positive electrode 308, and is conductive for electrons to allow current to enter the positive electrode

In the cell 300, the oxygen in the positive electrode dissolves and diffuses into the electrolyte 324 instead of existing in a permanent gaseous phase when the cell 300 is in a charged state. Thus, the positive electrode 308 is filled with the electrolyte 324 during operation. Alternative embodiments of metal-oxygen cells, including the cells 750 and 950 that are described in more detail below, operate with a permanent gas phase, such as a mixture liquid electrolyte and gas, in the positive electrode.

The molar concentration of the LiPF₆ salt in the electrolyte solution 324 is lower than the one (1) molar concentration found in earlier electrochemical cells of similar design, with some embodiments having a molar concentration of 0.25 - 0.7 molar, and alternative embodiments having a molar concentration of 0.25 - 0.5 molar. The lower molar concentration of the LiPF₆ salt results in the ionic conductivity of the electrolyte 324 being lower than electrolytes in earlier cells, and consequently the ionic impedance of the electrolyte 324 is higher than that of electrolytes in earlier cells.

FIG. 9 depicts the relationship of ionic conductivity to concentration for the electrolyte 324 used by electrochemical cell 300. While benefits are achieved at any molar concentration of less than 1 molar, optimal uniformity of current distributions, as discussed more fully below, are achieved in one embodiment with molar concentrations between about 0.25 and 0.7 molar. In a further embodiment, the molar concentration is more particularly selected in a range from about 0.25 and 0.5 molar as indicated by reference number 404 of FIG. 9.

Below concentrations of 1 molar, the ionic conductivity of the electrolyte decreases as the concentration of the salt decreases. The resulting ionic conductivity of the electrolyte 324 is in a range of about 0.2 to 0.5 Siemens per meter (or 2-5 milli-Siemens per centimeter as shown in FIG. 9). As ionic conductivity and ionic impedance are inversely related, an electrolyte with salt concentration in the range of reference 404 has greater ionic impedance than an electrolyte with a concentration of 1 molar.

While the ionic conductivity to salt concentration relationship of FIG. 9 is applicable to the example electrochemical cell described herein, various alternative electrolyte formulations are also envisioned. Thus, an alternative salt or solvent may be used in the electrolyte mixture.

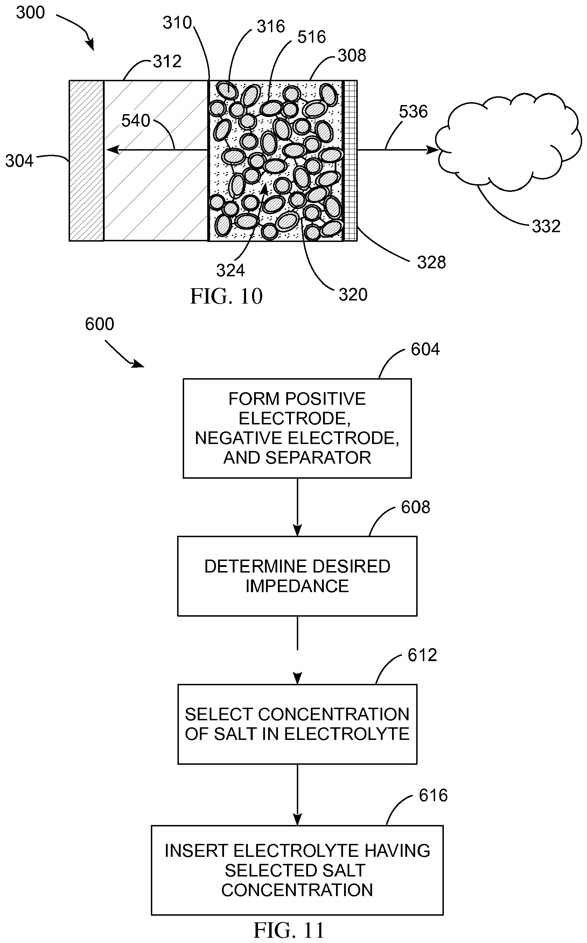

The configuration of FIG. 8 shows the electrochemical cell 300 when charged and FIG. 10 shows the electrochemical cell 300 when discharged. When in the condition of FIG. 8, the electrochemical cell 300 may discharge with lithium metal in negative electrode 304 ionizing into an Li⁺ ion with a free electron e⁻. Li⁺ ions travel through the separator 312 as indicated by arrow 336 towards the positive electrode 308. The external oxygen source 332 provides oxygen that enters the positive electrode 308 through the barrier 328 as indicated by arrow 340. Free electrons e⁻ flow into the positive electrode as indicated by arrow 340. The oxygen atoms and Li⁺ ions form a discharge product inside the positive electrode 308, aided by the catalyst material on the carbon particles 316. As seen in the following discharge equations, metallic lithium is ionized, combining with oxygen and free electrons in two ways to form Li₂O₂ or Li₂O discharge products.

*Li* → *L*i*⁺* + *e*⁻

(negative electrode) 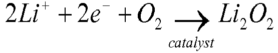 (positive electrode) 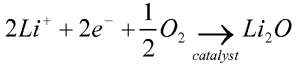 (positive electrode)

The discharge products formed at the positive electrode 308 plate the surfaces of the carbon particles 316. Thus, as electrochemical cell 300 discharges the carbon particles are plated with discharge product 516 as depicted in FIG. 10. Initially, while Li⁺ ions, oxygen gas, and electrons are uniformly distributed throughout the positive electrode 308, the discharge product tends to deposit in the positive electrode at locations corresponding the lowest total impedance in the electrolyte 324 in the positive electrode 308. The total impedance is composed of many elements, including ionic, electrical, kinetic, mass transfer, and perhaps others.

In the example of FIG. 8, the lowest total impedance region in the positive electrode is near the barrier 328 where the electrons are provided to the positive electrode 308. Thus, an increased production of discharge products 516 (see FIG. 10) occurs near the barrier 328. Accordingly, the produced discharge products 516 predominantly plate the carbon particles 316 in the positive electrode 308 near the barrier 328 and act as an insulator on the carbon particles 316 in the positive electrode 308 near the barrier 328.

As noted above, the cell 300 has a molar salt concentration less than one molar. The reduced salt concentration in the electrolyte 324 results in a shift of current through the positive electrode 308 to locations that are closer to the separator/positive electrode interface 310. Accordingly, the number of electrons that are available for combination with Li⁺ ions and oxygen in the positive electrode 308 near the barrier 328 is decreased lowering the energy density of the positive electrode 308 near the barrier 328. At the same time, the increased number of electrons that are available at locations closer to the separator 312 is increased. Therefore, an increased number of discharge reactions occur within the positive electrode 308 at locations closer to the separator 312, and the discharge product forms in a uniform manner throughout the positive electrode 308 instead of concentrating at low total impedance sites near the barrier 328. Thus, the cell 300 operates with a reduced current and power limit at the beginning of a discharge cycle compared to prior art cells, but the more uniform product distribution enables a higher total capacity (and hence energy) for the cell 300.

As the discharge products 516 are formed, the amount of oxygen available for further reactions is decreased. Thus, even if the oxygen is initially available at a uniform concentration throughout the electrolyte 324, the concentration of oxygen near the barrier 328 will begin to decrease and the depletion will continue in a direction toward the separator 312 as the discharge reactions are driven further toward the separator 312 based upon electron availability. Accordingly, oxygen, which is provided in a high concentration at the barrier 328, begins to diffuse towards the separator 312. Because production of discharge products 516 at locations near the barrier 328 has been reduced, barriers to oxygen diffusion are reduced allowing for an increased amount of oxygen diffusion to areas of the positive electrode 308 closer to the separator 312.

Consequently, as is shown in FIG. 10, each of the carbon particles 316 in cell 300 is plated more uniformly with a discharge product 516 resulting from a more uniform reaction of Li⁺, oxygen, and free electrons in the positive electrode 308 during the discharge process. This contrasts with the partially plated carbon particles 28 and 29 seen in FIG. 6 and FIG. 7, respectively. The reduced ionic impedance throughout the electrolyte 324 in the positive electrode 308 slows the plating of carbon particles 316 near the barrier 328. Consequently, the discharge product 516 is deposited more uniformly throughout the positive electrode 308. In one embodiment, the volume of the positive electrode 308 in the discharged cell 300 includes the electrically conductive matrix 320 (20%), discharge product (e.g. Li₂O₂) 516 (55%), and electrolyte 324 (25%) when the cell 300 is discharged in a uniform manner.

When desired, the electrochemical cell 300 of may be charged from the discharged condition shown in FIG. 10. Electrochemical cell 300 may be charged by introducing an external electric current which reduces the Li₂O₂ and Li₂O discharge products 516 to lithium and oxygen. The external current drives lithium ions towards the negative electrode 304 in the direction of the arrow 540 where the Li⁺ ions are reduced to metallic lithium, and drives oxygen into solution within the electrolyte 324 with excess oxygen being driven from the positive electrode 308 through the barrier 328 in the direction of the arrow 536. The charging process reverses the chemical reactions of the discharge process, as shown in the following charging equations.

*Li*⁺ + *e*⁻ → *Li* (negative electrode)

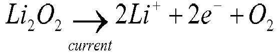

(positive electrode) 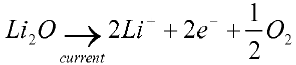 (positive electrode)

In one embodiment, the cell 300 may be formed in accordance with the process 600 of FIG. 11. Process 600 begins by forming the positive electrode, negative electrode, and separator (block 604). As discussed above regarding the example electrochemical cell 300 of FIG. 8, the negative electrode may be formed from a metallic lithium and the positive electrode may be formed from a porous matrix greater than 60 µm in thickness of a conductive carbon or nickel foam and including carbon particles coated with a catalyst. The separator made from a porous material is positioned between the positive and negative electrodes. A barrier, such as an aluminum mesh, configured to permit oxygen to enter and leave the positive electrode is provided on the positive electrode.

At block 608, the desired ionic impedance of electrolyte to be used in the electrochemical cell is determined. The ionic impedance is selected to produce a corresponding ionic conductivity that promotes a uniform rate of reaction between the Li⁺ ions and oxygen throughout the positive electrode.

Process 600 continues by selecting the concentration of salt in the electrolyte to match the desired ionic impedance (block 612). The ionic impedance of electrolyte in an electrochemical cell is determined by the porosity and tortuosity of the portion of the cell containing the electrolyte, as well as by the ionic conductivity of the electrolyte. For a fixed geometry electrochemical cell, the ionic impedance of electrolyte may be changed by selecting a salt concentration producing the appropriate ionic conductivity value. Various electrolyte mixtures have different ionic conductivity values depending upon on the formulations of salt and solvent used. The example cells in the foregoing description have salt concentrations of less than one molar, with optimal concentrations being between about 0.25 molar and 0.7 molar, and more particularly 0.25 molar to 0.5 molar.

Once the salt concentration is selected and the electrolyte is prepared, the electrolyte with reduced salt concentration is inserted into the electrochemical cell (block 616). The electrolyte is inserted into cavities formed in the porous separator and porous positive electrode in the electrochemical sell. In some embodiments, the negative electrode may also be porous. In embodiments with a porous negative electrode, the electrolyte is inserted into the negative electrode as well. The barrier on the positive electrode, which may be positioned after the electrolyte has been inserted, prevents electrolyte from leaking out of the positive electrode in operation.

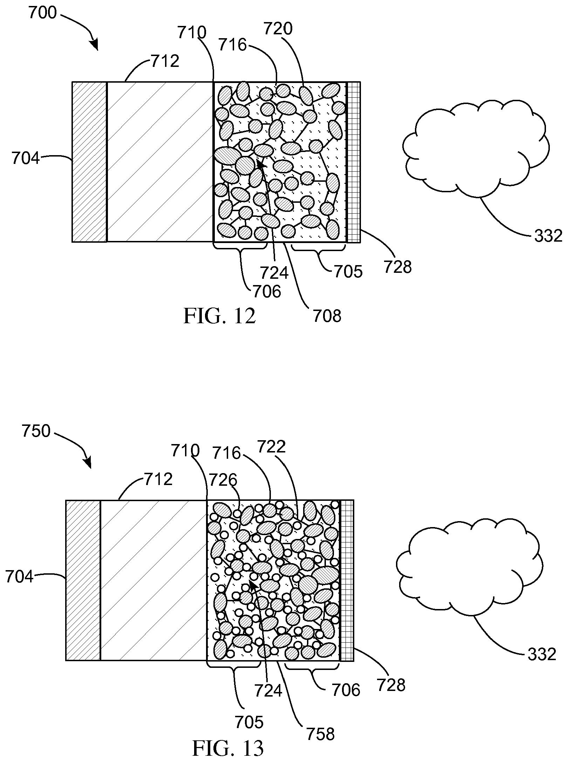

FIG. 12 depicts a metal-oxygen cell 700. The cell 700 includes a flooded positive electrode 708 with the matrix 720 in the positive electrode 708 being formed with a porosity gradient. The cell 700 includes a metallic negative electrode 704, a separator 712, a positive electrode 708, and a barrier 728 that separates the positive electrode 708 from an external oxygen source 332. In the cell 700, the negative electrode 704 is formed from lithium or another appropriate metal. The positive electrode 708 includes carbon particles 716 covered in a catalyst material and/or an oxidation-resistant coating such as SiC. The carbon particles 716 are suspended in a porous electrically conductive matrix 720, and an electrolyte 724.

In the embodiment of FIG. 12, the porous matrix 720 includes a graded porosity structure in the positive electrode 708 that includes a higher volume fraction of pores and/or a superior wetting surface near the barrier 728. The graded porosity structure promotes a uniform distribution of discharge product in the positive electrode 708.

In FIG. 12, the higher porosity in the region 705 near the barrier 728 facilitates the transport of O₂ into the positive electrode toward the positive electrode / separator interface 710, ensuring that as much discharge product can be deposited near the near the separator / positive electrode interface 710 as the positive electrode/current collector interface 728. In the region 705, the particles 716 are formed with wider gaps and spacing to enable a higher volume fraction of electrolyte 724 near the barrier 728. The density of the matrix 720 and particles 716 gradually increases toward the positive electrode and separator interface 710, with the region 706 including the highest density.

The gradient of low density to high density enables the particles 716 that are in the region 705 to be fully covered with the reaction product as the cell 700 discharges while still enabling oxygen from the oxygen source 332 to enter the positive electrode 708. The lower density of particles 716 in the region 705 reduces the energy density of the positive electrode 708 in the region 705. The oxygen from the oxygen source 332 reaches the higher density region 706, which has a higher energy density due to the increased surface area provided by the higher density of particles 716.

The density gradient of FIG. 12 is configured for a configuration of the cell 700 where the discharge product would otherwise accumulate more densely near the barrier 728 during the discharge process. The gradient of the density in the positive electrode 708 enables oxygen from the external oxygen source 322 to diffuse into the positive electrode 708 even if discharge product begins to accumulate near the boundary 328 during a discharge cycle. The porosity gradient enables improved utilization of the entire positive electrode 708 to increase the total effective energy density of the electrode 708.

FIG. 13 depicts another cell 750 that includes a mixed-phase positive electrode 758 where a continuous gas phase 726 is formed in the matrix 720 in addition to the liquid electrolyte 724. In the mixed-phase electrode 758, the matrix 722 includes a porosity gradient with the highest porosity, and consequently lowest density, near the positive electrode / separator interface 710 and the lowest porosity, and consequently highest density, near the barrier 728. In FIG. 13, the region 705 includes the highest porosity and the region 706 includes the lowest porosity. Thus, in the example of FIG. 13, the matrix 722 in the cell 750 includes a porosity gradient that is the reverse of the porosity gradient of the matrix 720 in the cell 700.

In the mixed-phase positive electrode 758, the discharge product tends to accumulate more heavily near the positive electrode / separator boundary 710 during the discharge cycle. The higher porosity region 705 in the matrix 722 enables Li⁺ ions from the negative electrode 704 to enter the positive electrode 758 even if discharge product begins to accumulate near the separator / positive electrode interface 710 during a discharge cycle. The Li⁺ diffuses through the higher-porosity region 705 and can reach the lower porosity region 706 near the barrier 728 without be blocked by discharge product near the positive electrode / separator boundary 710. The density gradient of FIG. 13 is thus configured for operation in a lithium limited mode. In both configurations of FIG. 12 and FIG. 13, the porosity gradient enables formation of the discharge product in a more uniform manner throughout the positive electrodes 708 and 758.

In another embodiment, the electrically conductive matrix 722 in the cell 750 is formed with an electrically conductive gradient across the positive electrode 758 instead of being formed with uniform electrical conductivity throughout the positive electrode 758. The graded electrical conductivity in the matrix 722 electrode influences the reaction rate by controlling the electrical impedance as a function of position within the positive electrode. The matrix 722 can be formed with the graduated electrical conductivity by, for example, changing the volume fraction of conductive additive as a function of position or by doping or otherwise adjusting the material electrical conductivity of the electrode material. In a configuration where the electric current density is higher toward the separator/electrode interface 710, the gradient of electrical conductivity in the matrix 722 has a minimum electrical conductivity proximate to the separator 710 and a maximum electrical conductivity proximate to the barrier 728. The electrical conductivity gradient can be combined with the porosity gradient depicted in the particles 716 and matrix 722 of FIG. 13, or a matrix with a substantially uniform porosity can be formed with the electrical conductivity gradient.

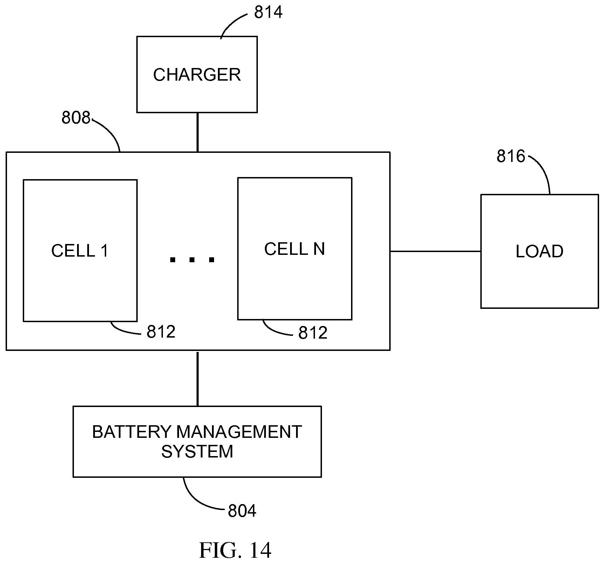

In another embodiment, a battery pack includes a plurality of individual metal-oxygen cells. As depicted in FIG. 14, a plurality of cells 812 are electrically connected in a battery pack 808. A battery management system 804, which is typically a digital control device, selectively adjusts the electrical voltage and current outputs from each of the cells 812 to enable the battery pack 808 to produce a predetermined electrical current to drive a load 816. The cells in the battery pack 808 can include cells with flooded positive electrodes and/or mixed-phase positive electrodes including, but not limited to, any of the cell configurations that are described herein. The adjustment of current levels in the cells 812 increase the uniformity of discharge product distribution in the through-plane direction of the positive electrodes and also along the length and width of the electrodes in each of the cells 812.

During a discharge operation, the battery management system 804 selectively draws a low level of current from some of the cells 812 while drawing a higher level of current from other cells 812. The battery management system 812 cycles the low and high current draw for each of the cells 812 to maintain a substantially constant output current from the battery pack 808 during the discharge operation. During a charge operation, the battery management system 804 controls an electrical current from a charger 814 to supply a low level of current to some of the cells 812 while supplying a higher level of current to other cells 812.

During both a discharge and charge operation, lower currents applied to the cells 812 produce a uniform product distribution, so the adjustment between low and high current draw from each cell 812 is used during both discharge and charge to influence the uniformity of product deposition and removal. For example, in a case in which a non-uniform product distribution has been created during a discharge, a low-rate charge may be used to fully remove the discharge product from the electrode. As another example, for a case in which a non-uniform product distribution has been created during a partial discharge, the battery management system 804 supplies a short, high-current charge pulse from the charger 814 to improve the uniformity of the discharge product by removing the product from the electrode region with the highest volume fraction.

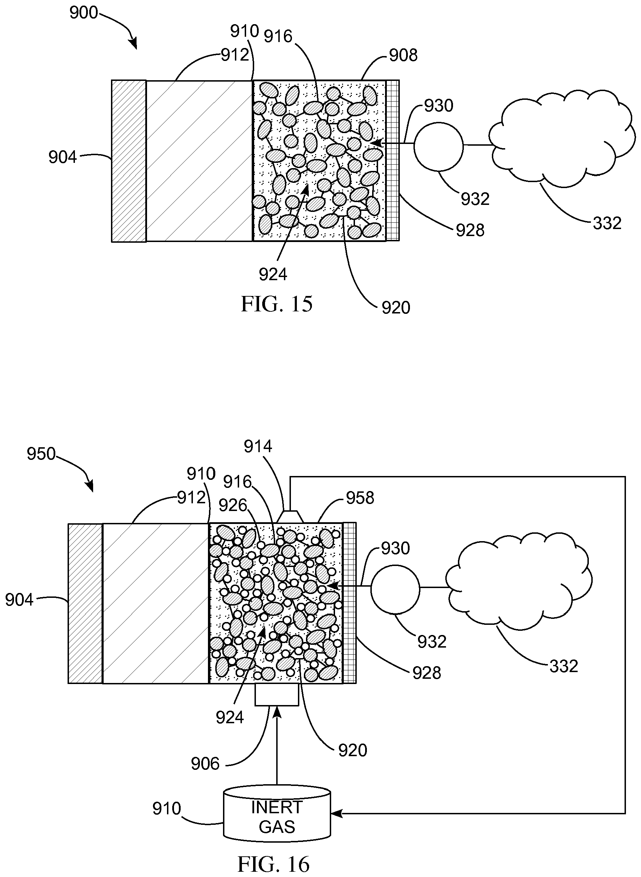

FIG. 15 and FIG. 16 depict metal-oxygen cells 900 and 950, respectively. In FIG. 15, the cell 900 includes a flooded positive electrode 908, and in FIG. 16 the cell 950 includes a mixed-phase positive electrode 958. In both embodiments, a pump 932 is configured to pump gas from an external oxygen source 332 into the positive electrode through a barrier 928. The adjustment of oxygen pressure applied to the positive electrodes 908 and 958 increases the uniformity of discharge product distribution in the through-plane direction of the positive electrodes and along the length and width of the electrodes.

Referring to FIG. 15, the cell 900 includes a metallic negative electrode 904, a separator 912, a positive electrode 908, and a barrier 928 that separates the positive electrode 908 from an external oxygen source 332. In the cell 900, the negative electrode 904 is formed from lithium or another appropriate metal. The positive electrode 908 includes carbon particles 916 covered in a catalyst material and suspended in a porous matrix 920, and an electrolyte 924. In the embodiment of FIG. 15, the pump 932 is configured to pump gas from the oxygen source 332 into the positive electrode 908 at varying pressure levels during a discharge cycle of the cell 900.

In the flooded electrode configuration of FIG. 15, the oxygen pressure in the positive electrode 908 is increased when the electrical current is greatest in the positive electrode 908 near the barrier 928. The pump 932 pumps additional oxygen into the positive electrode in direction 930 to increase the oxygen pressure in the positive electrode 908. The pressure level delivered from the pump 932 is selected to enable a uniform distribution of the discharge product in the positive electrode 908 to prevent excess discharge product from accumulating near the barrier 928.

Referring to FIG. 16, the cell 950 is also coupled to the pump 932. During a discharge operation in the cell 950, the pump 932 supplies oxygen from the oxygen source to the positive electrode 958 at a reduced pressure compared to the configuration of FIG. 15. The pump 932 supplies less oxygen to the positive electrode 958 to reduce the oxygen pressure in the positive electrode 958. The pressure level delivered from the pump 932 is selected to enable a uniform distribution of the discharge product in the positive electrode 958 to prevent excess discharge product from accumulating near the separator/positive electrode interface 910.

In FIG. 16, the cell 950 includes a mixed-phase positive electrode 958 including a continuous gas phase 926 in addition to the liquid electrolyte 924 in the matrix 920. Additionally, the cell 950 includes a diffuser 906 that is coupled to the positive electrode 958 to diffuse an inert gas, such as nitrogen gas, from an inert gas supply 910 into the electrolyte 924 in the positive electrode 958. In the operating modes of the electrochemical cell 950, the mixture of gasses in the electrolyte 924 is adjusted to enable reduced ionic impedance, and consequently uniform distribution of the discharge product, throughout the positive electrode 958.

N₂ inert gas for use with the diffuser 906 can be obtained through a separation process carried out on air that is being fed to the battery in order to supply O₂ for the reaction. Separation processes that may be used in obtaining O₂ of a suitable purity for the reaction, such as membrane separation, pressure swing adsorption, and temperature swing adsorption. In a membrane separation process, differences in the solubility and diffusion coefficients of O₂ and N₂ are used to carry out a separation, while in the case of pressure swing and temperature swing adsorption, either N₂ or O₂ could be selectivity adsorbed onto a solid surface, such as a zeolite.

In the cell 950, the diffuser 906 and the pump 932 control a ratio of oxygen to inert gas that is present in the positive electrode 908. The ratio of gases is controlled through direct adjustment of the flow rate and pressure of the oxygen within the cell in cases in which the oxygen is stored or obtained externally from the cells, and through the variation of oxygen to inert gas composition in the input stream (e.g., the ratio of O₂ to N₂). As used herein, the term "inert gas" refers to any gas in the positive electrode that does not participate in the electrochemical reactions that occur during a discharge or charge cycle and that does not react adversely with the electrolyte, catalysts, or otherwise interfere with the operation of the cell 900.

In addition to controlling a level of inert gas in the positive electrode 924, the diffuser 906 diffuses inert gas into the electrolyte 924 to control the convection in the electrolyte 924 and influence the mixing within the electrode. The diffuser 906 thereby influences the transport of reactants within and the distribution of reaction product in the positive electrode 958. Such variation could be achieved in practice by varying the flow rate of inert gases, in addition to oxygen, through the flow field and electrode structures, and through the use of flow and composition control devices, and through the use of suitable baffling structures in the electrode. For example, in a case in which the current density is highest at the separator/electrode interface 910, the rate of convection may be increased to shift the current density towards the positive electrode/current collector interface at the barrier 928.

In the example of FIG. 16, a diffuser 906 generates bubbles of an inert gas from an inert gas supply 910. The inert gas supply 910 can include a pure or concentrated inert gas, such as N₂, or can be supplied from the external atmosphere using membrane separation, pressure swing adsorption, and temperature swing adsorption that prevent impurities such as CO, CO₂, or H₂O, from entering the positive electrode 908. In a closed-loop configuration, the inert gas exits the positive electrode 908 through a vent 914 and returns to the inert gas supply 910. In an open-loop configuration, the gas can pass through the vent 914 to the external atmosphere.

While the invention has been illustrated and described in detail in the drawings and foregoing description, the same should be considered as illustrative and not restrictive in character. Only the preferred embodiments have been presented and all changes, modifications and further applications that come within the spirit of the invention are desired to be protected.

## Claims

1. An electrochemical cell (300, 700, 750, 900, 950), comprising:
a negative electrode (304, 704, 904) including a form of lithium;
a thick positive electrode (308, 708, 758, 908, 958) spaced apart from the negative electrode (304, 704, 904) and configured to use a form of oxygen as a reagent;
a separator (312, 712, 912) positioned between the negative electrode (304, 704, 904) and the thick positive electrode (308, 708, 758, 908, 958); and
an electrolyte (324, 724, 924) including a salt concentration of less than 1 molar filling or nearly filling the positive electrode (308, 708, 758, 908, 958),
wherein the thick positive electrode (308, 708, 758, 908, 958) has a thickness of greater than about 60 µm.

2. The electrochemical cell (300, 700, 750, 900, 950) of claim 1, wherein the salt concentration is between about 0.25 molar and 0.7 molar.

3. The electrochemical cell (300, 700, 750, 900, 950) of claim 2, wherein the salt concentration is between about 0.25 molar and 0.5 molar.

4. The electrochemical cell (300, 700, 750, 900, 950) of claim 2, wherein the thick positive electrode (308, 708, 758, 908, 958) is porous, the thick positive electrode (308, 708, 758, 908, 958) including:
a plurality of carbon particles (316, 716, 916) covered in an oxidation-resistant coating such as SiC; and
a barrier (328, 728, 928) configured to permit exchange of oxygen between the thick positive electrode (308, 708, 758, 908, 958) and an external oxygen source (332).

5. The electrochemical cell (300, 700, 750, 900, 950) of claim 2, wherein the salt includes lithium.

6. The electrochemical cell (300, 700, 750, 900, 950) of claim 5, wherein the salt is primarily composed of lithium hexafluorophosphate.

7. The electrochemical cell (300, 700, 750, 900, 950) of claim 2, wherein the electrolyte (324, 724, 924) includes an organic solvent primarily composed of a mixture of ethylene carbonate and diethyl carbonate.

8. The electrochemical cell (300, 700, 750, 900, 950) of claim 2, wherein the electrolyte (324, 724, 924) has an ionic conductivity between about 0.2 Siemens per meter and 0.5 Siemens per meter.

9. A method of forming an electrochemical cell (300, 700, 750, 900, 950) with an improved impedance balance, comprising:
forming a negative electrode (304, 704, 904) including a form of lithium;
forming a thick positive electrode (308, 708, 758, 908, 958) configured to use a form of oxygen as a reagent;
forming a separator (312, 712, 912) such that when assembled, the separator (312, 712, 912) is positioned between the negative electrode (304, 704, 904) and the thick positive electrode (308, 708, 758, 908, 958); and
inserting an electrolyte (324, 724, 924) including a salt concentration of less than 1 molar in the thick positive electrode (308, 708, 758, 908, 958),
wherein forming the thick positive electrode (308, 708, 758, 908, 958) further comprises forming the thick positive electrode (308, 708, 758, 908, 958) with a thickness of greater than about 60 µm.

10. The method of claim 9 further comprising:
determining a desired ionic impedance; and
selecting the salt concentration based on the desired ionic impedance.

11. The method of claim 10, wherein inserting the electrolyte (324, 724, 924) comprises:
inserting an electrolyte (324, 724, 924) with a salt concentration between about 0.25 molar and 0.7 molar.

12. The method of claim 11, wherein inserting the electrolyte (324, 724, 924) comprises:
inserting an electrolyte (324, 724, 924) with a salt concentration between about 0.25 molar and 0.5 molar.

13. The method of claim 10, wherein forming the thick positive electrode (308, 708, 758, 908, 958) comprises:
forming a porous electrode (308, 708, 758, 908, 958) including a plurality of carbon particles (316, 716, 916) covered by an oxidation-resistance coating; and
forming a barrier (328, 728, 928) configured to permit exchange of diatomic oxygen between the porous positive electrode (308, 708, 758, 908, 958) and an external oxygen source (332).

## Patentansprüche

1. Elektrochemische Zelle (300, 700, 750, 900, 950), aufweisend:
eine negative Elektrode (304, 704, 904), enthaltend eine Form von Lithium;
eine dicke positive Elektrode (308, 708, 758, 908, 958), die von der negativen Elektrode (304, 704, 904) beabstandet ist und konfiguriert ist, eine Form von Sauerstoff als ein Reaktionsmittel zu verwenden;
einen Separator (312, 712, 912), der zwischen der negativen Elektrode (304, 704, 904) und der dicken positiven Elektrode (308, 708, 758, 908, 958) positioniert ist; und
einen Elektrolyten (324, 724, 924), der eine Salzkonzentration von weniger als 1 Mol enthält, der die positive Elektrode (308, 708, 758, 908, 958) füllt oder nahezu füllt,
wobei die dicke positive Elektrode (308, 708, 758, 908, 958) eine Dicke von größer als ungefähr 60 µm hat.

2. Elektrochemische Zelle (300, 700, 750, 900, 950) nach Anspruch 1, wobei die Salzkonzentration zwischen ungefähr 0,25 Mol und 0,7 Mol ist.

3. Elektrochemische Zelle (300, 700, 750, 900, 950) nach Anspruch 2, wobei die Salzkonzentration zwischen ungefähr 0,25 Mol und 0,5 Mol ist.

4. Elektrochemische Zelle (300, 700, 750, 900, 950) nach Anspruch 2, wobei die dicke positive Elektrode (308, 708, 758, 908, 958) porös ist, die dicke positive Elektrode (308, 708, 758, 908, 958) enthaltend:
eine Vielzahl von Kohlenstoffpartikeln (316, 716, 916), die in einer oxidationsbeständigen Beschichtung, wie SiC, bedeckt sind; und
eine Barriere (328, 728, 928), die konfiguriert ist, einen Austausch von Sauerstoff zwischen der dicken positiven Elektrode (308, 708, 758, 908, 958) und einer äußeren Sauerstoffquelle (332) zu erlauben.

5. Elektrochemische Zelle (300, 700, 750, 900, 950) nach Anspruch 2, wobei das Salz Lithium enthält.

6. Elektrochemische Zelle (300, 700, 750, 900, 950) nach Anspruch 5, wobei das Salz primär aus Lithiumhexafluorphosphat zusammengesetzt ist.

7. Elektrochemische Zelle (300, 700, 750, 900, 950) nach Anspruch 2, wobei der Elektrolyt (324, 724, 924) ein organisches Lösemittel enthält, das primär aus einer Mischung aus Ethylencarbonat und Diethylcarbonat besteht.

8. Elektrochemische Zelle (300, 700, 750, 900, 950) nach Anspruch 2, wobei der Elektrolyt (324, 724, 924) eine ionische Leitfähigkeit zwischen ungefähr 0,2 Siemens pro Meter und 0,5 Siemens pro Meter hat.

9. Verfahren zum Bilden einer elektrochemischen Zelle (300, 700, 750, 900, 950) mit einem verbesserten Impedanzsymmetrie, aufweisend:
Bilden einer negativen Elektrode (304, 704, 904), enthaltend eine Form von Lithium;
Bilden einer dicken positiven Elektrode (308, 708, 758, 908, 958), die konfiguriert ist, eine Form von Sauerstoff als ein Reaktionsmittel zu verwenden;
Bilden eines Separators (312, 712, 912), sodass, wenn zusammengefügt, der Separator (312, 712, 912) zwischen der negativen Elektrode (304, 704, 904) und der dicken positiven Elektrode (308, 708, 758, 908, 958) positioniert ist; und
Einfügen eines Elektrolyten (324, 724, 924), der eine Salzkonzentration von weniger als 1 Mol enthält, in die dicke positive Elektrode (308, 708, 758, 908, 958),
wobei ein Bilden der dicken positiven Elektrode (308, 708, 758, 908, 958) ferner ein Bilden der dicken positiven Elektrode (308, 708, 758, 908, 958) mit einer Dicke größer als ungefähr 60 µm aufweist.

10. Verfahren nach Anspruch 9, ferner aufweisend:
Ermitteln einer gewünschten ionischen Impedanz; und
Auswählen der Salzkonzentration, basierend auf der gewünschten ionischen Impedanz.

11. Verfahren nach Anspruch 10, wobei Einfügen des Elektrolyten (324, 724, 924) aufweist:
Einfügen eines Elektrolyten (324, 724, 924) mit einer Salzkonzentration zwischen ungefähr 0,25 Mol und 0,7 Mol.

12. Verfahren nach Anspruch 11, wobei Einfügen des Elektrolyten (324, 724, 924) aufweist:
Einfügen eines Elektrolyten (324, 724, 924) mit einer Salzkonzentration zwischen ungefähr 0,25 Mol und 0,5 Mol.

13. Verfahren nach Anspruch 10, wobei ein Bilden der dicken positiven Elektrode (308, 708, 758, 908, 958) aufweist:
Bilden einer porösen Elektrode (308, 708, 758, 908, 958), die eine Vielzahl von Kohlenstoffpartikeln (316, 716, 916) enthält, die von einer oxidationsbeständigen Beschichtung bedeckt sind; und
Bilden einer Barriere (328, 728, 928), die konfiguriert ist, einen Austausch von zweiatomigem Sauerstoff zwischen der dicken positiven Elektrode (308, 708, 758, 908, 958) und einer äußeren Sauerstoffquelle (332) zu erlauben.

## Revendications

1. Cellule électrochimique (300, 700, 750, 900, 950), comprenant :
une électrode négative (304, 704, 904) comprenant une forme de lithium ;
une électrode positive épaisse (308, 708, 758, 908, 958) à distance de l'électrode négative (304, 704, 904) et conçue pour utiliser une forme d'oxygène en tant que réactif ;
un séparateur (312, 712, 912) disposé entre l'électrode négative (304, 704, 904) et l'électrode positive épaisse (308, 708, 758, 908, 958) ; et
un électrolyte (324, 724, 924) comprenant une concentration en sel inférieure à 1 mol/l remplissant ou remplissant presque l'électrode positive (308, 708, 758, 908, 958),
dans laquelle l'électrode positive épaisse (308, 708, 758, 908, 958) a une épaisseur supérieure à environ 60 µm.

2. Cellule électrochimique (300, 700, 750, 900, 950) selon la revendication 1, dans laquelle la concentration en sel est comprise entre environ 0,25 mol/l et 0,7 mol/l.

3. Cellule électrochimique (300, 700, 750, 900, 950) selon la revendication 2, dans laquelle la concentration en sel est comprise entre environ 0,25 mol/l et 0,5 mol/l.

4. Cellule électrochimique (300, 700, 750, 900, 950) selon la revendication 2, dans laquelle l'électrode positive épaisse (308, 708, 758, 908, 958) est poreuse, l'électrode positive épaisse (308, 708, 758, 908, 958) comprenant :
une pluralité de particules de carbone (316, 716, 916) recouvertes d'un revêtement résistant à l'oxydation tel que du SiC ; et
une barrière (328, 728, 928) conçue pour permettre l'échange d'oxygène entre l'électrode positive épaisse (308, 708, 758, 908, 958) et une source externe d'oxygène (332).

5. Cellule électrochimique (300, 700, 750, 900, 950) selon la revendication 2, dans laquelle le sel comprend du lithium.

6. Cellule électrochimique (300, 700, 750, 900, 950) selon la revendication 5, dans laquelle le sel est principalement composé d'hexafluorophosphate de lithium.

7. Cellule électrochimique (300, 700, 750, 900, 950) selon la revendication 2, dans laquelle l'électrolyte (324, 724, 924) comprend un solvant organique principalement composé d'un mélange de carbonate d'éthylène et de carbonate de diéthyle.

8. Cellule électrochimique (300, 700, 750, 900, 950) selon la revendication 2, dans laquelle l'électrolyte (324, 724, 924) a une conductivité ionique comprise entre environ 0,2 Siemens par mètre et 0,5 Siemens par mètre.

9. Procédé de formation d'une cellule électrochimique (300, 700, 750, 900, 950) présentant un équilibre d'impédance amélioré, comprenant :
la formation d'une électrode négative (304, 704, 904) comprenant une forme de lithium ;
la formation d'une électrode positive épaisse (308, 708, 758, 908, 958) conçue pour utiliser une forme d'oxygène en tant que réactif ;
la formation d'un séparateur (312, 712, 912) de façon telle que lorsqu'il est assemblé, le séparateur (312, 712, 912) est disposé entre l'électrode négative (304, 704, 904) et l'électrode positive épaisse (308, 708, 758, 908, 958) ; et
l'insertion d'un électrolyte (324, 724, 924) comprenant une concentration en sel inférieure à 1 mol/l dans l'électrode positive épaisse (308, 708, 758, 908, 958),
dans lequel la formation de l'électrode positive épaisse (308, 708, 758, 908, 958) comprend en outre la formation de l'électrode positive épaisse (308, 708, 758, 908, 958) avec une épaisseur supérieure à environ 60 µm.

10. Procédé selon la revendication 9 comprenant en outre :
la détermination d'une impédance ionique souhaitée ; et
la sélection d'une concentration en sel sur la base de l'impédance ionique souhaitée.

11. Procédé selon la revendication 10, dans lequel l'insertion de l'électrolyte (324, 724, 924) comprend :
l'insertion d'un électrolyte (324, 724, 924) ayant une concentration en sel comprise entre environ 0,25 mol/l et 0,7 mol/l.

12. Procédé selon la revendication 11, dans lequel l'insertion de l'électrolyte (324, 724, 924) comprend :
l'insertion d'un électrolyte (324, 724, 924) ayant une concentration en sel comprise entre environ 0,25 mol/l et 0,5 mol/l.

13. Procédé selon la revendication 10, dans lequel la formation de l'électrode positive épaisse (308, 708, 758, 908, 958) comprend :
la formation d'une électrode poreuse (308, 708, 758, 908, 958) comprenant une pluralité de particules de carbone (316, 716, 916) recouvertes d'un revêtement de résistance à l'oxydation ; et
la formation d'une barrière (328, 728, 928) conçue pour permettre l'échange d'oxygène diatomique entre l'électrode positive poreuse (308, 708, 758, 908, 958) et une source externe d'oxygène (332).
